# EUROPÄISCHE PATENTANMELDUNG

(11) **EP 2 146 184 A2**
(43) Veröffentlichungstag der Anmeldung: **20.01.2010**
(21) Anmeldenummer: 09100292.3
(22) Anmeldetag: 26.05.2009
(51) Int. Cl.: G01C 21/34

(54) **Verfahren zur Eingabe und Darstellung von Informationen in eniem Navigationssystem**

(30) Priorität: 16.07.2008 DE 102008040470
(71) Anmelder: Robert Bosch GmbH, 70469 Stuttgart (DE)
(72) Erfinder: Mueller, Guido, 06484, Quedlinburg (DE); Stuebner, Guido, 30455, Hannover (DE)

(57) **Zusammenfassung**

Die Erfindung betrifft ein Verfahren zur Eingabe und Darstellung von Informationen in einem Navigationssystem mittels mindestens einer Anzeige- und Eingabeeinheit (6), wobei durch eine Fahrtroutenermittlungseinrichtung (3) eine optimale Route von einem Startpunkt zu einem Zielpunkt auf der Grundlage von Navigationsdaten berechnet wird. Es wird vorgeschlagen, dass bei der Fahrtroutenermittlung zusätzlich individuell vorliegende Berechtigungen des Fahrers berücksichtigt werden.

## Beschreibung

Die vorliegende Erfindung geht aus von einem Verfahren zur Eingabe von Informationen in einem Navigationssystem gemäß den Merkmalen des Oberbegriffs des Anspruchs 1.

Heutige Navigationssysteme ermöglichen die Berechnung von Routen hinsichtlich verschiedener Kriterien, wie z.B. minimale Fahrzeit oder Fahrstrecke. Zusätzlich lassen sich bestimmte allgemein frei zugängliche und mit bestimmtem Attributen versehene Streckenabschnitte meiden, wie z.B. Tunnel, Mautstrassen oder Fähren. Dabei werden diese Strecken meist hinsichtlich ihrer Fahrzeit oder Fahrstrecke bewertet, so dass die Route möglichst wenig oder keine Streckenanteile mit den zu meidenden Eigenschaften enthält.

Neben diesen frei zugänglichen Streckenabschnitten gibt es auch Streckenabschnitte mit bestimmten Nutzungseinschränkungen, wie z.B.:
- Nicht befahrbar, da der Streckenabschnitt für das Fahrzeug in seinen Dimensionen nicht ausreichend ist, z.B. schmale Treppen oder schmale Fußwege.
- Nicht erreichbar, da der Streckenabschnitt für das Fahrzeug aufgrund fester oder beweglicher baulicher Vorkehrungen (z.B. Poller oder Schranke) nicht erreichbar ist, obwohl er jedoch technisch befahrbar wäre.
- Verboten bzw. nicht pauschal erlaubt, da der Streckenabschnitt für einzelne Fahrzeuge bzw. für einzelne Fahrer zum Befahren nicht erlaubt ist (z.B. Umweltzonen in Innenstädten, Vignettenpflicht, Zugang nur für Busse oder Rettungskräfte, obwohl der Streckenabschnitt technisch erreichbar und befahrbar wäre.

Dabei werden die ersten beiden Kategorien von Einschränkungen in heutigen Navigationssystemen durch die Attribute "nicht befahrbar" und "eingeschränkt befahrbar" abgebildet und bei der Routenberechnung pauschal gemieden, da sie für den allgemeinen Verkehr nicht erreichbar oder befahrbar sind.

Die aufgezeigte dritte Kategorie, d.h. pauschal nicht erlaubte Streckenabschnitte können dagegen bei Vorlage der Nutzungserlaubnis bei der Routenwahl genutzt werden. Im umgekehrten Fall, d.h. ohne Vorliegen einer entsprechenden Berechtigung bzw. Erlaubnis sollten diese Streckenabschnitte bei der Routenwahl jedoch ausgeschlossen werden. Derzeitige Navigationssysteme bieten jedoch nicht die Möglichkeit, derartige Streckenabschnitte in Abhängigkeit vom Vorliegen einer Berechtigung bzw. Erlaubnis individuell unterscheiden zu können. Diese Streckenabschnitte werden derzeit bei der Routenwahl pauschal freigegeben, mit der Konsequenz, dass der Fahrer gegebenenfalls eine Strafe zu zahlen hat.

Aufgabe der Erfindung ist es daher, die eingangs geschilderten Nachteile eines derartigen Navigationssystems zu beseitigen.

Die Lösung der Aufgabe erfolgt dabei durch die im Anspruch 1 angegebenen Merkmale.

Durch eine individuelle Berücksichtigung der für das Fahrzeug bzw. für den Fahrer erteilten Erlaubnis zum Befahren derartiger Streckenabschnitte hat der Anwender eine bessere Möglichkeit, den Verlauf seiner Route in Abhängigkeit von vorhandenen persönlichen Berechtigungen zu beeinflussen.

In den Unteransprüchen sind weitere vorteilhafte Ausgestaltungen und Verbesserungen des erfindungsgemäßen Verfahrens zur Eingabe und Darstellung von Informationen in einem Navigationssystem aufgeführt.

Das erfindungsgemäße Verfahren zur persönlichen individuellen Routenauswahl lässt sich für verschiedene Ereignisse anwenden, wie z.B. bei
- Vignettenpflicht
- Umweltplakette
- Citymaut, z.B. in London
- Sperrung von Innenstädten für bestimmte Nummernschilder, z.B. in Athen oder Peking
- Sonderberechtigungen für Busse oder Taxis
- Sonderberechtigungen für Einsatzfahrzeuge der Polizei
- Sonderberechtigungen für Rettungskräfte, wie Feuerwehr oder Krankenwagen.

Ein Ausführungsbeispiel der Erfindung ist in der nachfolgenden Beschreibung und Zeichnung näher erläutert.

Es zeigen:
Figur 1 eine schematische Darstellung eines Navigationsgerätes beispielsweise für Kraftfahrzeuge mit seinen wesentlichen Komponenten
Figur 2a eine Dialog- Displayanzeige auf dem Bildschirm eines Navigationsgeräts,
Figur 2b eine Dialog- Unterdisplayanzeige auf dem Bildschirm des Navigationsgeräts,
Figur 3 eine schematische grafische Darstellung für die Auswahl von verschiedenen Routen und
Figur 4 eine tabellarische Übersicht von Routen mit unterschiedlichen Eigenschaften.

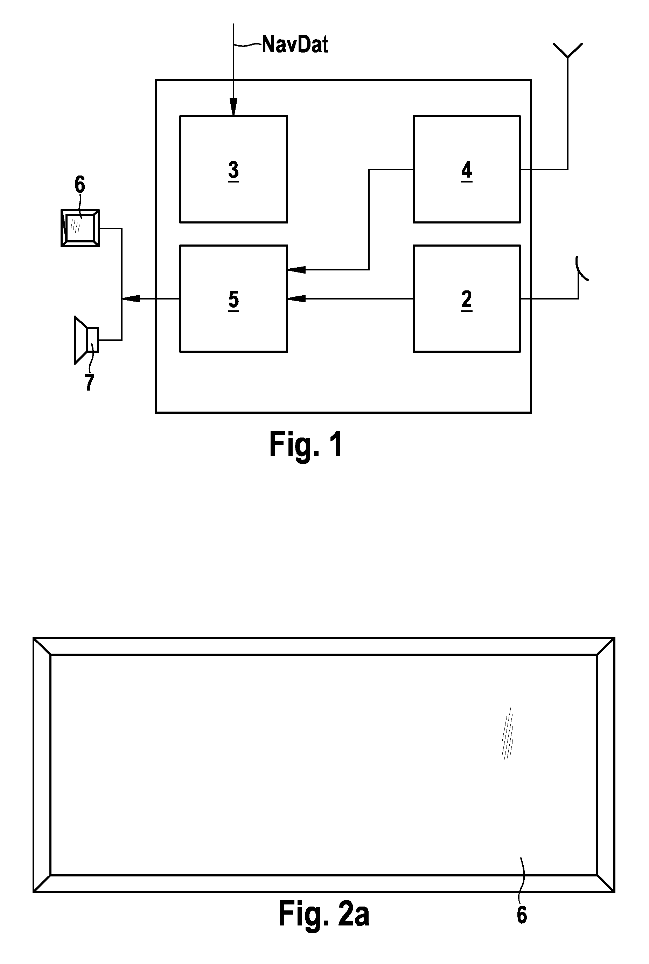

In Figur 1 ist ein Navigationsgerät mit seinen wesentlichen Komponenten dargestellt. Dazu gehören eine Positionsortungseinrichtung 2, die beispielsweise mit einem Global-Positioning- System, kurz GPS, zusammenwirkt. Eine Fahrtroutenermittlungseinrichtung 3 berechnet optimale Routen von einem Startpunkt zu einem Zielpunkt auf der Grundlage von Navigationsdaten NavDat. Die Navigationsdaten können aus einer im Navigationssystem befindlichen CD-ROM oder einem anderen Speichermedium ausgelesen werden; alternativ dazu können natürlich die Navigationsdaten auch über Funk durch einen externen Serviceprovider zur Verfügung gestellt werden, der dann bspw. auch die Routenberechnung übernimmt.

Die Verkehrslageinformationen können beispielsweise über den Traffic-Message-Channel TMC ausgewertet werden, über den Verkehrslagemeldungen von Radiosendern (Radio Data-System, kurz RDS) ausgestrahlt werden. Diese Verkehrslageinformationen werden in der Verkehrslagen- Auswertungseinheit 4 beispielsweise über Referenzlisten Strassenabschnitte und/oder Strassenknotenpunkte zugeordnet, die dann im Navigationsgerät entsprechend gekennzeichnet werden.

Das Navigationsgerät hat weiterhin eine Steuereinheit 5, in denen die optimierten Routen- und Verkehrslageinformationen zusammengeführt und optisch über ein Display 6 und/oder über ein Lautsprechersystem 7 ausgegeben werden.

Zur Umsetzung der individuellen persönlichen Routenplanung im Navigationssystem wird neben der Abbildung des eigentlichen Routen- Berechnungsverfahrens, für das aus dem Stand der Technik verschiedenen Methoden bekannt sind, dem Nutzer auch die Möglichkeit gegeben, die Routenberechnungsparameter in Abhängigkeit seiner persönlichen vorhandenen Berechtigungen zu definieren. Diese können fest mit dem System verbunden sein oder anderweitig in das System eingeprägt werden.

Die einfachste Variante besteht darin, dass der Nutzer im HMI die Möglichkeit hat, bei den Einstellungen für die Routenberechnung die Berechtigungen bzw. die Erlaubnis zum Befahren der Strecke individuell zu definieren.

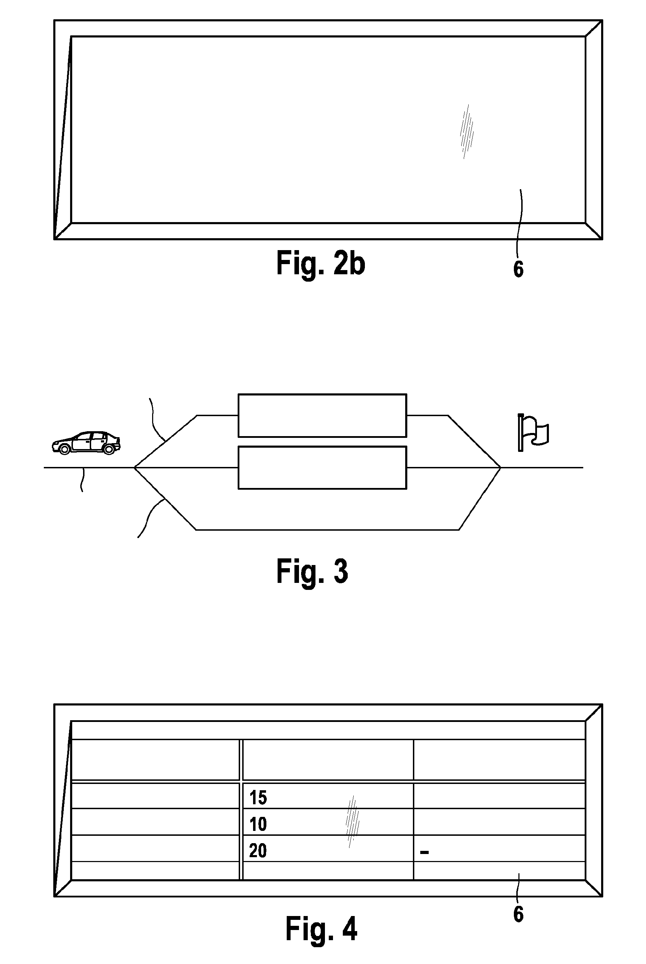

In den in Figur 2 abgebildeten Beispieldialogen werden eine Vignette und eine Umweltplakette als notwendige Voraussetzung zum Befahren der Strecke angezeigt. Dabei hat der Nutzer die Möglichkeit, die vorhandenen Vignetten für die einzelnen Länder auszuwählen. Die Auswahl erfolgt dabei über das Display 6, an dem entsprechende Bedien- und Eingabeelemente angeordnet sind. Optional dazu ist es denkbar, auch die zeitliche Gültigkeit der Erlaubnis bzw. Berechtigung festzulegen.

Für die Vignette oder auch die Umweltplakette ist eine Kopplung mit Geräten zur elektronischen Mauterfassung oder das mögliche elektronische Auslesen der Umweltplakette mittels Radio Frequency Identification (RFID)- Technik oder anderer Übertragungstechniken möglich.

Andere bestimmte Berechtigungen können auch fest im Gerät eingestellt sein oder über die Fahrzeugvernetzung festgelegt werden. So kann die Berechtigung, Bus oder Taxifahrbahnen benutzen zu dürfen, durch die Gerätegrundkonfiguration entsprechend festgelegt werden oder durch das Taxameter über entsprechende Vernetzung aktiviert werden.

Für Polizei, Feuerwehr, Krankenwagen und ähnliche Fahrzeuge können ferner auch die zusätzlichen Berechtigungen gemäß der STVO berücksichtigt werden. Für diese Fahrzeuge wird dann neben einer Grundkonfiguration zusätzlich definiert, ob sie sich gerade im Einsatz befinden, also beispielsweise Blaulicht eingeschaltet haben.

### Berechnung der Route

Bei der Routenberechnung werden die zu berücksichtigenden Streckeneigenschaften auf ein abstraktes Widerstandsmodell zurückgeführt, so dass das eigentliche Verfahren (z.B. Dijkstra- Algorithmus oder A*- Algorithmus) unabhängig von neuen Routenkriterien oder sog. Meideoptionen ist. Die Berücksichtigung der beim Nutzer vorhandenen Berechtigungen kann deshalb mit jedem dieser Routenberechnungsverfahren realisiert werden.

Für die Routenberechnung ergibt sich hinsichtlich des Meidens von Straßen, für welche das Fahrzeug bzw. der Fahrer keine Erlaubnis bzw. Berechtigung hat, folgende Regel.

R1 für Routen muss die erforderliche Erlaubnis vorhanden sein, oder die Strecke ist frei befahrbar.

R2 die Route hat den geringsten Widerstand gemäß eingestellten Routenkriterien.

Basierend auf der eingangs geschilderten Beispielsituation werden die Ergebnisse der Routenberechnung unter Berücksichtigung des Attributs "Vignette" gemäß Regel R1 und R2 anhand von Figur 3 näher erläutert.

In der Beispielsituation gemäß Figur 3 gibt es für die aktuelle Start-Ziel-Beziehung drei mögliche Strecken (siehe dazu auch Tabelle in Figur 4) zur Auswahl, die mit unterschiedlichen Eigenschaften belegt sind. Ohne die Berücksichtigung der Eigenschaft "Vignette" wird bei der Routenberechnung die beste Strecke hinsichtlich der eingestellten Kriterien gewählt, d.h. die Strecke B mit dem geringsten Widerstand.

Die Strecke B ist als Route jedoch nur sinnvoll, wenn der Fahrer mindestens die Vignette für die Schweiz besitzt. Falls er diese Vignette nicht hat, hilft ihm diese Route nicht weiter, da er Gefahr läuft, kontrolliert zu werden und eine Geldstrafe zahlen zu müssen.

Unter der Berücksichtigung des Vorhandenseins einer Vignette für die Schweiz würde gemäß des hier vorgestellten Verfahrens die Strecke B in jedem Fall Priorität haben, da sie gemäß R1 erlaubt ist und gemäß R2 den besten bzw. geringsten Widerstand aufweist.

Für den Fall, dass keine Vignette vorhanden ist, wird durch dieses Verfahren die Strecke C trotz ihres hohen Widerstands gewählt, da diese gemäß R1 die einzig frei befahrbare Strecke ist und die anderen beiden aufgrund der Vignettenpflicht nicht erlaubt wären.

Aufgrund des besseren Widerstandes der Strecke A würde diese Strecke als Route nur in Betracht kommen, wenn ausschließlich die Vignette für Österreich vorhanden ist.

Das beschriebene Verfahren mit dem Stichwort: "Meiden von Straßen, für welche das Fahrzeug oder der Fahrer keine Erlaubnis hat" lässt sich durch das entsprechende HMI einfach in der Routenwahl berücksichtigen. So kann dem Anwender in den Routenberechnungseinstellungen im HMI die Möglichkeit geboten werden, die existierenden Berechtigungen individuell festzulegen und bei der Routenwahl zu berücksichtigen, bzw. die nicht vorhandenen zu meiden. Bei nicht explizit an den Einsatzzweck des Fahrzeugs gebundenen Berechtigungen, wie z.B. Vignette oder Umweltplakette ist letzteres sogar zwingend erforderlich.

In Abhängigkeit von den Routeneinstellungen ergeben sich unterschiedliche Routen, insbesondere dann, wenn z.B. bei der Vignettenpflicht auf österreichischen Autobahnen die SCHNELLE ROUTE gewählt wurde. Bei einer SCHNELLEN ROUTE werden meist die vignettenpflichtigen Autobahnen genutzt, die ohne eine entsprechende Berechtigung nicht Bestandteil der Route sein dürfen.

Beim Meiden von vignettenpflichtigen Autobahnen werden nur die Autobahnen gemieden, für die die Vignette nicht vorhanden ist. Im Gegensatz dazu werden bei den herkömmlichen Verfahren beim Meiden von Autobahnen sämtliche Autobahnen gemieden.

Im Fall der Umweltplakette ergeben sich bei der Routenwahl je nach Verfügbarkeit der entsprechenden Plakette in den jeweiligen Regionen entsprechende Unterschiede. So werden bestimmte Innenstädte gemieden, andere jedoch nicht.

Das zuvor beschriebene Verfahren zur Eingabe und Darstellung von Informationen in einem Navigationssystem ist natürlich nicht nur für den Einsatz in Kraftfahrzeugen, sondern auch für Krafträder, Fahrradfahrer o.ä. geeignet.

## Patentansprüche

1. Verfahren zur Eingabe und Darstellung von Informationen in einem Navigationssystem mittels mindestens einer Anzeige- und Eingabeeinheit (6), wobei durch eine Fahrtroutenermittlungseinrichtung (3) eine optimale Route von einem Startpunkt zu einem Zielpunkt auf der Grundlage von Navigationsdaten berechnet wird, **dadurch gekennzeichnet, dass** bei der Fahrtroutenermittlung individuell vorliegende Berechtigungen des Fahrers, des Mitfahrers, des Fahrzeuges (z.B. Krankenwagen, Taxen oder Busse) oder der Fahrzeugladung berücksichtigt werden.

2. Verfahren nach Anspruch 1, **dadurch gekennzeichnet, dass** es bei verschiedenen Berechtigungsanforderungen, wie beispielsweise Vignettenpflicht, Umweltplakettenpflicht, Citymaut, Sperrung von Innenstädten für Fahrzeuge mit bestimmten Nummernschildern, Anwendung findet.

3. Verfahren nach Anspruch 1, **dadurch gekennzeichnet, dass** bei Vignetten- oder Umweltplakettenpflicht eine Kopplung mit Geräten zur elektronischen Mauterfassung oder das elektronische Auslesen der Umweltplakette mittels RFID-Technik oder anderer Übertragungstechniken möglich ist.

4. Verfahren nach Anspruch 1 oder 2, **dadurch gekennzeichnet, dass** die Berechtigungsanforderungen bereits im Navigationssystem festgelegt sind, oder alternativ dazu, durch den Fahrer eingegeben werden.

5. Verfahren nach Anspruch 1 oder 2, **dadurch gekennzeichnet, dass** die Berechtigungsanforderungen durch das Fahrzeug oder die Bordelektronik bzw. durch die Vernetzung mit anderen Systemen (Mautgeräte) vorgegeben sind.
